# FASCICULE DE BREVET EUROPEEN

(11) **EP 1 344 398 B1**
(45) Date de publication et mention de la délivrance du brevet: **28.01.2009**
(21) Numéro de dépôt: 01995773.7
(22) Date de dépôt: 21.12.2001
(51) Int. Cl.: H04N 7/14

(54) **SYSTEME INTERACTIF AUDIOVISUEL COMPRENANT PLUSIEURS DISPOSITIFS DE PRISE DE VUE**
INTERAKTIVES AUDIOVISUELLES SYSTEM MIT MEHREREN BILDAUFNAHMEVORRICHTUNGEN
AUDIO-VISUAL INTERACTIVE SYSTEM COMPRISING SEVERAL FILMING DEVICES

(30) Priorité: 22.12.2000 FR 0016998
(43) Date de publication de la demande: 17.09.2003
(73) Titulaire: FRANCE TELECOM, 75015 Paris (FR)
(72) Inventeur: BUCHNER, Georges, F-75012 Paris (FR); LEYRELOUP, Alain, F-92130 Issy les Moulineaux (FR); DESROUSSEAUX, Patrick, F- 75015 Paris (FR)
(74) Mandataire: Joly, Jean-Jacques
(86) Numéro de dépôt international: PCT/FR2001/004173
(87) Numéro de publication internationale: WO 2002/052851

(56) Documents cités:
- EP-A- 0 720 412
- WO-A-98/47291
- US-A- 4 890 314
- US-A- 5 187 571
- US-A- 5 612 734

## Description

L'invention concerne un système interactif audiovisuel comprenant plusieurs dispositifs de prise de vue.

L'invention se rapporte également à un système de prise de vue.

Le domaine de l'invention est celui de la téléprésence permettant de mettre en présence une scène locale et une scène distante.

Lorsqu'une ou plusieurs personnes font partie des scènes locale et distante, on parle alors de visioconférence permettant à ces personnes de se réunir à distance.

La téléprésence est une extension de la visioconférence.

La téléprésence comme la visioconférence est obtenue par l'intermédiaire de la transmission de l'image, du son voire aussi de données représentant textes, graphiques, diaporama, ....

Bien qu'une scène puisse se dérouler à l'extérieur, elle se déroule généralement dans un bâtiment. C'est pourquoi, on désignera par salle locale le lieu où se déroule la scène locale et par salle distante, le lieu où se déroule la scène distante.

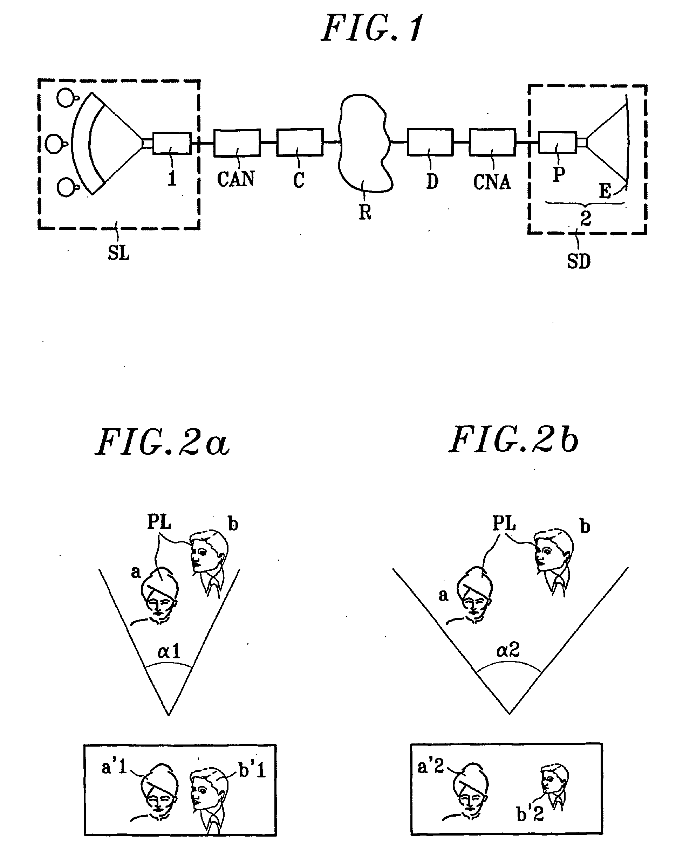

La transmission de l'image d'une salle locale SL disposant d'un dispositif de prise de vue 1 vers une salle distante SD disposant d'un dispositif de restitution suit un parcours schématiquement représenté figure 1 comprenant un dispositif de prise de vue 1 tel qu'une caméra, éventuellement un convertisseur analogique numérique CAN, un système de codage C, un réseau de transmission R, un système de décodage D, éventuellement un convertisseur numérique analogique CNA et un dispositif de restitution de l'image 2 tel qu'un projecteur P couplé à un écran E. Cet écran peut être un écran à plasma, à LCD, à CRT, ....

Pour que la communication soit réciproque, la chaîne représentée figure 1 est reproduite en sens inverse de la salle distante SD où a lieu la prise de vue vers la salle locale SL où a lieu la restitution.

Chaque salle est finalement équipée à la fois d'un dispositif de prise de vue et d'un dispositif de restitution.

On désignera dans la suite par système interactif audiovisuel, un système situé dans une salle et comprenant au moins un dispositif de prise de vue et un dispositif de restitution.

Parmi les systèmes interactifs audiovisuels, on connaît les systèmes de visioconférence. Ces systèmes de visioconférence se présentent sous différentes formes : salle de visioconférence, visiophone, ordinateur personnel (PC) communiquant multimédia, borne interactive, etc.

Ces systèmes sont faits pour être utilisés à une certaine distance, tant en ce qui concerne la prise de vue que la restitution, en fonction de la taille de l'image et du service qui en est fait.

La taille des participants ou des objets lors de la restitution varie en fonction de la partie du champ dans laquelle ils se trouvent et en fonction de l'angle de champ α de la caméra, définissant le cône maximal du faisceau F de rayons pouvant être captés parmi tous les rayons issus de la scène à enregistrer. La plupart des caméras actuelles sont des dispositifs de prise de vue conique.

Pour simplifier on va considérer par la suite, ces angles de champ dans un espace à deux dimensions, en l'occurrence celui des figures.

Si l'on veut filmer une scène large, il faut élargir le champ mais les images restituées donnent l'impression d'être courbées dans la mesure où les effets de perspective sont faussés sur les bords de l'image ; les images restituées présentent un effet de grandissement variable illustré par les figures 2a) et 2b) et bien connu des photographes utilisant un grand angle comme objectif.

Sur chacune de ces figures, sont représentés deux participants locaux PL, a et b, l'un en retrait par rapport à l'autre, et filmés par un dispositif de prise de vue présentant dans le cas de la figure 2a) un angle de champ α1 moins large que dans le cas α2 de la figure 2b). Les images restituées a'1 et a'2 de a sont quasiment semblables dans les deux cas, mais le grandissement de b'1 par rapport à b (figure 2a) est supérieur à celui de b'2 par rapport à b (figure 2b).

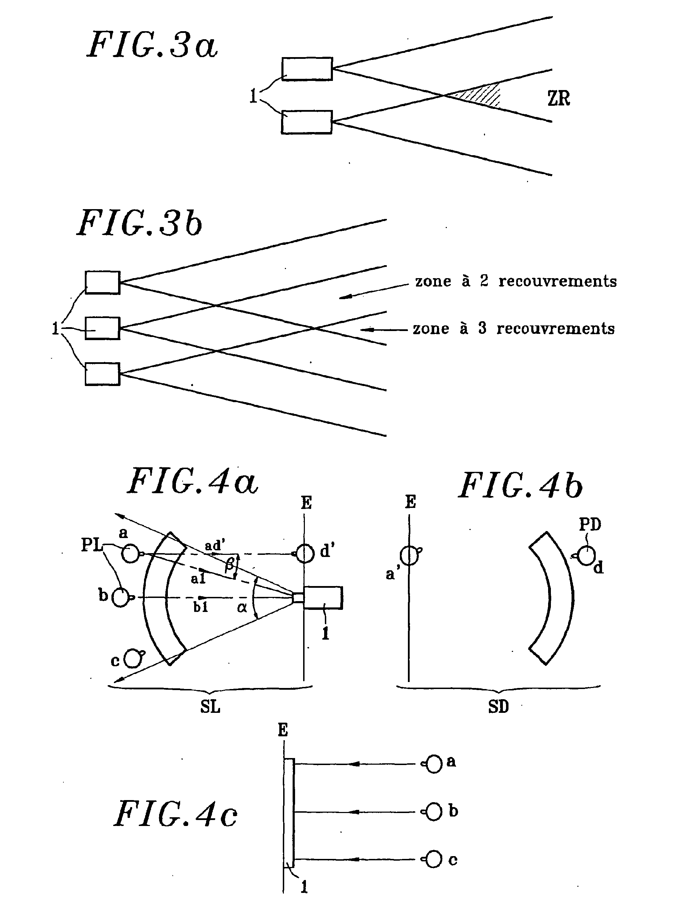

Pour compenser ces inconvénients liés à un grand angle de prise de vue, on dispose plusieurs dispositifs 1 de prise de vue présentant chacun un angle de champ moins large que α2, comme représenté figures 3a) et 3b).

Afin d'assurer la continuité de prise de vue, ces dispositifs dont les axes optiques sont parallèles et dans un même plan, sont adjacents : on "concatène" plusieurs dispositifs 1. Mais il s'ensuit que les champs de prise de vue ont des zones communes ou de recouvrements ZR et que les images restituées sur un ou plusieurs dispositifs de restitution adjacents correspondant chacun à un dispositif de prise de vue, présenteront des discontinuités provenant des parties dupliquées ou recouvrements. On appelle recouvrement de vue la reproduction multiple de la même scène prise par des caméras différentes dont les champs se recouvrent partiellement.

Dans le cas de deux dispositifs 1 de prise de vue comme représenté figure 3a), il y aura une zone à deux recouvrements ZR ; dans le cas de trois dispositifs 1 de prise de vue représentés figure 3b), il y aura des zones à deux recouvrements lorsqu'on est proche des dispositifs de prise de vue, à trois recouvrements lorsqu'on s'en éloigne, etc.

Ce phénomène de recouvrement des vues augmente lorsque l'angle de champ des dispositifs de prise de vue augmente.

Des logiciels de traitement d'image sont actuellement développés pour résoudre ce problème mais ils ne donnent pas encore de résultats satisfaisants.

Un autre effet des dispositifs de prise de vue conique, est "l'effet faux jeton" illustré sur les figures 4a) et 4b) dans un contexte de visioconférence entre des participants locaux et des participants distants.

La figure 4a) représente schématiquement vu de dessus, un dispositif de prise de vue conique 1 d'un participant local situé dans une salle locale SL. La direction du regard du participant est indiquée par le petit trait censé représenter le nez du participant. Sur un écran E est formée l'image des participants distants PD présents dans la salle distante SD (figure 4b), notamment l'image d' du participant distant d.

Lorsque le participant local a qui n'est pas dans l'axe de la caméra représenté pas le rayon bl, s'adresse au participant distant, il regarde l'image d' de ce participant distant sur l'écran E. Bien que a regarde d' de face selon le rayon ad', la caméra reçoit le rayon a1, et finalement filme le participant a de profil.

C'est cette image de profil qui est transmise au dispositif de restitution situé dans la salle distante SD, qui restitue à d, comme illustré figure 4b), l'image a' de a comme si a ne regardait pas d. Le contact des regards n'est pas restitué.

Une solution permettant de diminuer l'effet de gène provoqué par une prise de vue avec un grand angle (effet faux jeton et perspective faussée), consiste à limiter l'angle β formé en un point a de la scène par les rayons ad' et a1, représenté figure 4a). Une spécification de l'ETSI, Institut Européen des Normes de Télécommunications, préconise que cet angle β n'excède pas 8°. Cet angle est obtenu en limitant la scène filmée voire en la tronquant ou en plaçant la caméra au voisinage de l'axe de visualisation, ce qui gène la visualisation.

Le but de la présente invention est donc d'éliminer le problème de recouvrement des vues dans le cas d'un système de prise vue multiple en assurant la continuité d'une vue à l'autre et éventuellement d'éliminer le problème lié à "l'effet faux jeton".

Elle permet d'accroître la téléconvivialité entre les participants distants en leur donnant l'impression de partager le même espace et en favorisant les rencontres informelles.

L'invention a pour objet
Système de prise de vue comprenant plusieurs dispositifs de prise de vue disposant chacun d'un angle de champ définissant un faisceau de rayons lumineux pouvant être captés par ledit dispositif de prise de vue, ledit système étant caractérisé en ce qu'il comprend des moyens d'agencement desdits dispositifs de prise de vue de façon à ce que l'angle de champ de chaque dispositif de prise de vue soit contigu à l'angle de champ du dispositif de prise de vue voisin, et des moyens de commande simultanée des prises de vue, en ce que chacun desdits dispositifs de prise de vue est associé à un miroir concave, apte à replier le faisceau vers ledit dispositif de prise de vue auquel il est associé et présentant un foyer, et en ce que ledit dispositif de prise de vue est situé au voisinage du foyer dudit miroir associé.

L'invention a également pour objet un système interactif audiovisuel entre une scène locale et une scène distante comprenant le système de prise de vues.

D'autres particularités et avantages de l'invention apparaîtront clairement à la lecture de la description faite à titre d'exemple non limitatif et en regard des dessins annexés sur lesquels :
- la figure 1, déjà décrite représente schématiquement la chaîne des éléments situés le long du parcours d'une image entre une salle locale et une salle distante,
- les figures 2a) et 2b), déjà décrites illustrent l'effet de grandissement de l'image restituée en fonction de l'angle de champ du dispositif de prise de vue,
- les figures 3a) et 3b), déjà décrites mettent en évidence des zones de recouvrement dans le cas respectivement de deux et de trois dispositifs de prise de vue,
- les figures 4a), 4b) et 4c) déjà décrites illustrent l'effet faux jeton,
- les figures 5a) et 5b) représentent schématiquement un mode de réalisation d'un système de prise de vue non conforme à l'invention,
- les figures 6a) et 6b) représentent schématiquement un autre mode de réalisation d'un système de prise de vue dont seul le second est conforme à l'invention,
- les figures 7a) et 7b) représentent schématiquement un système interactif audiovisuel comportant un système de prise de vue et un système de restitution,
- les figures 8a) et 8b) représentent une vue d'un mode de réalisation en kiosque d'un système interactif audiovisuel selon l'invention,
- la figure 9 représente schématiquement un exemple de fonctionnement d'un système interactif audiovisuel selon l'invention.

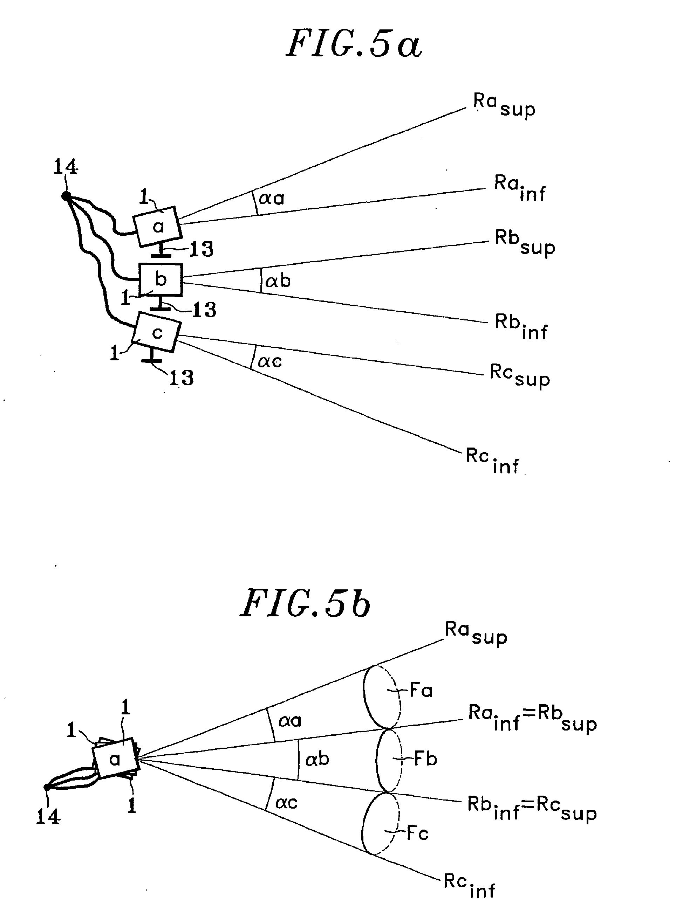

Les figures 5a), 5b), 6a) et 6b) concernent un système de prise de vue comprenant plusieurs dispositifs 1 de prise de vue, en l'occurrence trois dispositifs 1a, 1b et 1c. Les vues ou les scènes à enregistrer sont dans des plans perpendiculaires au plan des figures et sont enregistrées simultanément par les dispositifs 1a, 1b et 1c, au moyen d'une commande 14 déclenchant simultanément la prise de vue de chacun des dispositifs.

Chaque dispositif 1 de prise de vue est caractérisé par son angle de champ α.

Ces dispositifs 1 de prise de vue sont agencés de façon à ce que leurs angles de champ soient contigus deux à deux. Pour cela, le système de prise de vue comporte des moyens d'agencement 13 des dispositifs 1 de prise de vue : ils sont par exemple montés sur un pied articulé tel que ceux utilisés par les photographes, permettant de déplacer et/ou d'orienter le dispositif de prise de vue selon plusieurs directions et de le fixer dans la position et/ou l'orientation souhaitée. On peut disposer d'un pied articulé par dispositif de prise de vue ou monter plusieurs dispositifs de prise de vue sur un même pied articulé.

On désigne respectivement le bord inférieur des angles de champ des dispositifs 1a, 1b et 1c par les rayons Ra_{inf}, Rbinf et Rc_{inf} ; de même pour les bords supérieurs : Raₛᵤₚ, Rbₛᵤₚ et Rcₛᵤₚ.

Ainsi sur la figure 5a), les dispositifs 1a, 1b et 1c sont orientés de manière à ce que Ra_{inf} soit parallèle à Rbₛᵤₚ et Rb_{inf} parallèle à Rcₛᵤₚ : mais leur positionnement introduit un écart entre les angles de champ et, par là, une discontinuité entre les prises de vue du dispositif 1a et celles du dispositif 1b par exemple.

On remédie à cet inconvénient en superposant les dipsositifs 1a, 1b et 1c comme représenté figure- 5b). On a alors Rai_{nf} = Rbₛᵤₚ et Rb_{inf} = Rcₛᵤₚ. On obtient ainsi une continuité entre les vues prises par le dispositif 1a et celles prises par le dispositif 1b ; de même entre les vues prises par le dispositif 1b et celles prises par le dispositif 1c.

Il n'est pas toujours possible de superposer les dispositifs 1a, 1b et 1c comme représenté figure 5b). De plus, on souhaite parfois réduire la distance entre la scène à enregistrer et les dispositifs de prise de vue. Une solution consiste alors à replier au moyen d'un ou plusieurs miroirs, les faisceaux F correspondant à chacun des angles de champ α. On désigne par Fa, Fb et Fc les faisceaux correspondant respectivement aux angles de champ αa, αb et αc.

Les rayons Ra_{inf} et Rbₛᵤₚ qui sont repliés par ce ou ces miroirs ne sont alors parallèles que sur une partie de leur longueur ; de même pour les rayons Rbinf et Rcₛᵤₚ. Dorénavant, la notion d'angles de champ contigus deux à deux englobera la notion de contigüité partielle.

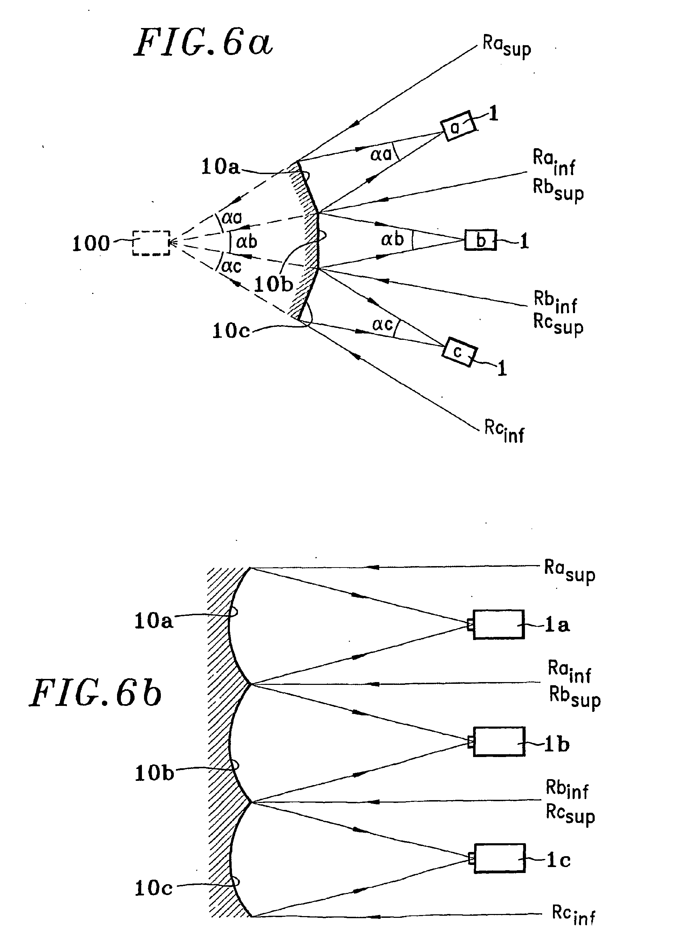

Deux systèmes de prise de vue correspondant à cette solution sont représentés figures 6a) et 6b) : des miroirs adjacents 10a, 10b et 10c sont respectivement placés sur le trajet des faisceaux Fa, Fb et Fc. Les angles de champ αa, αb et αc sont de préférence égaux.

Dans le cas de la figure 6a), les miroirs sont disposés en kiosque, c'est-à-dire selon une portion de polygone. Plus l'angle de champ est ouvert, plus les côtés du polygone sont longs et plus les dispositifs de prise de vue 1a, 1b et 1c sont alors éloignés les uns des autres. Une telle configuration correspond à celle de la figure 5b) : en effet, c'est comme si les dispositifs de prise de vue 1a, 1b et 1c étaient superposés à l'emplacement 100.

Les miroirs peuvent être plans.

Dans le cas de la figure 6b), qui correspond à l'invention, le système de prise de vue est télécentrique : les miroirs 10a, 10b et 10c sont concaves et présentent chacun un foyer, de façon à renvoyer sur les dispositifs 1a, 1b et 1c respectivement situés au foyer des miroirs, les faisceaux Fa, Fb et Fc constitués de rayons parallèles entre eux, les faisceaux étant alors cylindriques. La prise de vue n'est alors plus conique mais cylindrique comme représenté figure 4c) pour un seul dispositif de prise de vue. Un tel système télécentrique permet à chaque dispositif de prise de vue d'enregistrer les rayons parallèles au rayon ad' de la figure 4a) et présente ainsi l'avantage d'éliminer l'effet faux-jeton.

Les systèmes de prise de vue tels que décrits s'appliquent dans différents domaines tels que la photographie, la cinématographie, la visioconférence, la télé-médecine, le télé-enseignement ou plus généralement la téléprésence. On peut aussi les installer dans des espaces ludiques.

On va à présent considérer plus spécifiquement le domaine de la téléprésence et décrire un système interactif audiovisuel incluant d'une part un système de prise de vue d'une scène locale tel que l'un de ceux qui viennent d'être décrits et d'autre part un système de restitution d'une scène distante.

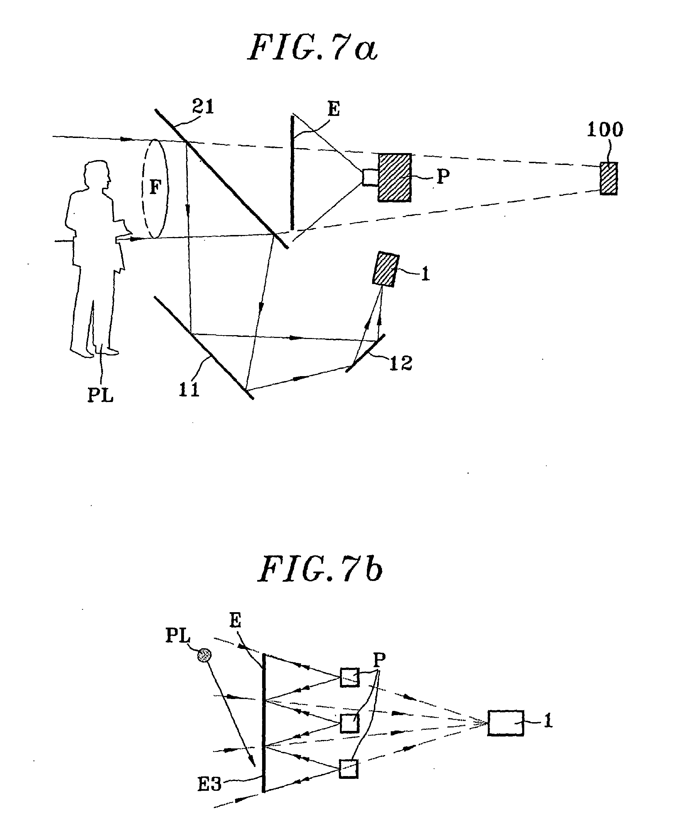

On a d'abord représenté figure 7a) un système interactif audiovisuel comportant un dispositif de prise de vue et un dispositif de restitution.

Le dispositif 2 de restitution comprend un vidéoprojecteur P projetant sur un écran E, face au participant local PL, l'image de la scène distante. L'écran E peut être un écran à plasma, à LCD, à CRT, etc. L'image peut être en n'importe quel format (16/9, 4/3, 3/4), au standard cinéma, photo, etc. Le participant local PL observe l'image de la scène distante formée sur l'écran E, à travers une lame semi-réfléchissante 21 utilisée dans ce cas pour sa capacité de transmission. Une lame semi-réléchissante aussi appelée semi-transparente est caractérisée par des coefficients de réflexion et de transmission respectivement de 30% et 70% par exemple.

Au dispositif 1 de prise de vue, par exemple une caméra, sont associés deux miroirs 11 et 12 plans et la lame semi-réfléchissante 21 pour replier le faisceau F. La lame semi-réfléchissante est utilisée dans ce cas pour sa capacité de réflexion et assure ainsi éventuellement la fonction du miroir 10 des figures 6a) et 6b) (le miroir 10 et la lame semi-réfléchissante 21 sont confondus).

La caméra 100 est la caméra virtuelle correspondant au faisceau non replié.

Un système de prise de vue qui permet l'effet de téléprésence (diminution de l'effet faux jeton, non recouvrement des vues, effet panoramique) peut_être couplé à un système de restitution qui présente un effet de kiosque approché de façon à avoir une juxtaposition d'image projetée sur un écran le plus plat possible (le kiosque est très ouvert). L'écran peut aussi être courbe.

Un exemple d'un tel système interactif audiovisuel est présenté figure 7b). Trois faisceaux de prise de vue convergeant vers le dispositif de prise de vue 1, sont superposés à trois faisceaux issus de trois videoprojecteurs P, formant trois images contiguës sur un seul écran plat E et non pas sur trois écrans disposés en kiosque.

Cette configuration facilite la réalisation de l'écran et la vision en biais du participant local PL vers la partie E3 de l'écran ; mais elle diminue un peu le contact des regards lorsque le participant PL est au bord du système.

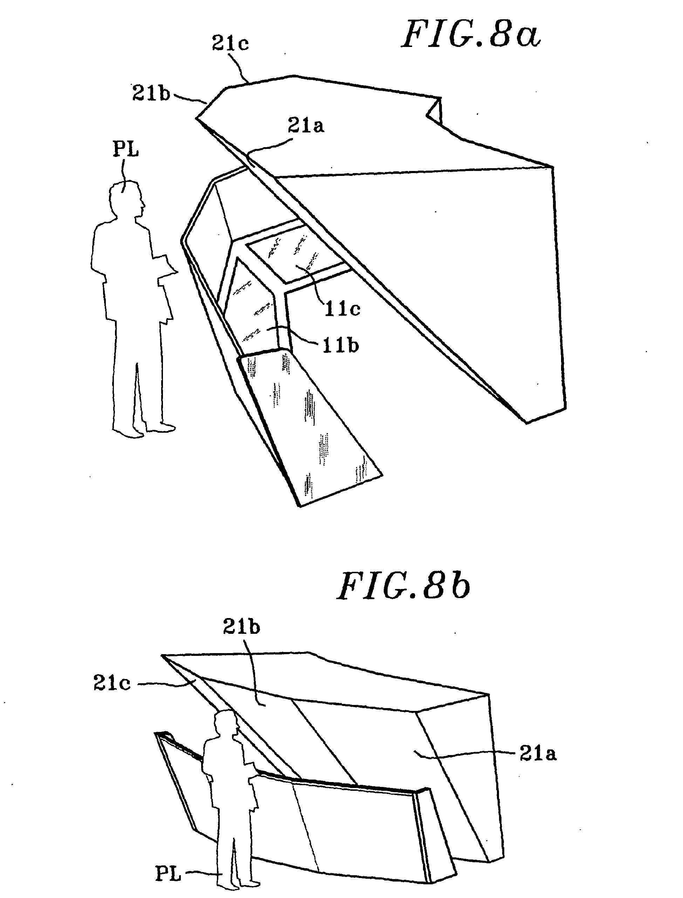

Sur les figures 8a) et 8b) est schématiquement représenté en perspective un prototype d'un système interactif audiovisuel selon l'invention comportant plusieurs systèmes similaires à celui de la figure 7 et disposés en kiosque.

Ce système comprend plusieurs lames semi-réfléchissantes 21a, 21b, 21c et plusieurs miroirs 11a. (caché), 11b, 11c. Un participant local PL est schématiquement représenté devant le système.

De tels systèmes interactifs audiovisuels selon l'invention peuvent être utilisés dans d'autres contextes que celui de la visioconférence.

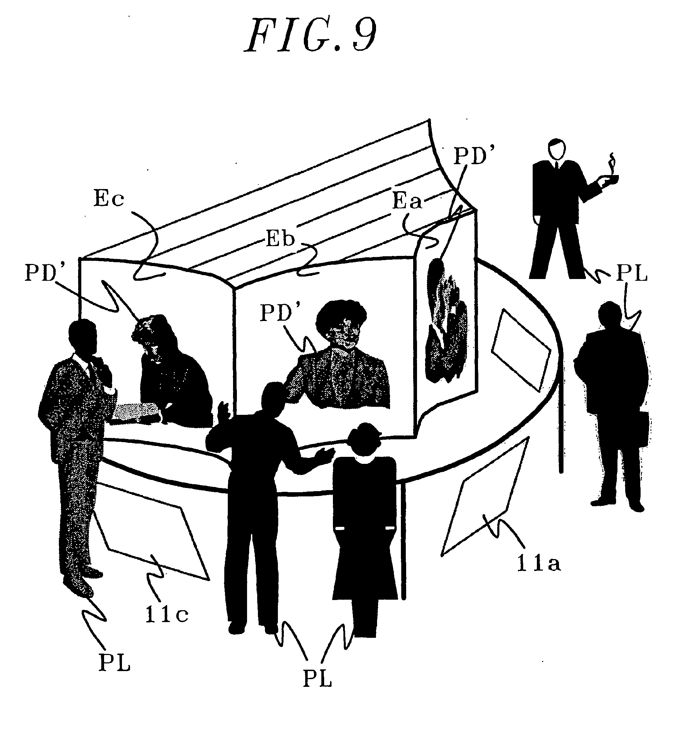

Un exemple de fonctionnement d'un système interactif audiovisuel selon l'invention est schématiquement représenté figure 9. Il s'agit d'un système dont les dispositifs de prise vue et de restitution sont disposés en kiosque. Sur cette figure sont représentés les miroirs 11a, 11b (caché) et 11c des dispositifs de prise de vue. Les images PD' des participants distants sont formées sur des écrans courbes Ea, Eb, Ec. Les participants locaux PL peuvent circuler autour du kiosque et passer d'un dispositif de prise de vue à l'autre sans discontinuité entre les vues.

Selon une autre configuration, le système peut prendre la forme d'un mur de téléprésence dans un hall, dans la rue, .... Une personne passant devant un mur de téléprésence situé par exemple à Paris peut communiquer en aparté ou de façon informelle avec une personne distante passant devant un autre mur de téléprésence situé par exemple à Nantes et connecté à celui de Paris, comme si elles se rencontraient dans la rue, dans un couloir, etc. Ces personnes distantes peuvent par exemple marcher "côte-à-côte".

Ces systèmes sont reliés de façon quasi permanente à un autre kiosque ou mur de téléprésence distant. Il n'est plus nécessaire de réserver le service comme c'est souvent le cas actuellement pour les systèmes de visioconférence.

Quelques exemples de systèmes interactifs audiovisuels selon l'invention ont été présentés mais l'invention s'applique bien sûr à d'autres configurations.

## Revendications

1. Système de prise de vue comprenant plusieurs dispositifs (1) de prise de vue disposant chacun d'un angle de champ (α) définissant un faisceau (F) de rayons lumineux pouvant être captés par ledit dispositif (1) de prise de vue, **caractérisé en ce qu'**il comprend des moyens d'agencement (13) desdits dispositifs de prise de vue de façon à ce que l'angle de champ de chaque dispositif de prise de vue soit contigu à l'angle de champ du dispositif de prise de vue voisin, et des moyens de commande (14) simultanée des prises de vue, **en ce que** chacun desdits dispositifs de prise de vue est associé à un miroir concave (10), apte à replier le faisceau (F) vers ledit dispositif (1) de prise de vue auquel il est associé et présentant un foyer, et **en ce que** ledit dispositif (1) de prise de vue est situé au voisinage du foyer dudit miroir associé.

2. Système de prise de vue selon la revendication 1, **caractérisé en ce que** chaque miroir (10) est un miroir cylindrique ou torique ou de révolution.

3. Système de prise de vue selon l'une quelconque des revendications 1 et 2, **caractérisé en ce que** les miroirs respectifs (10) desdits dispositifs de prise de vue sont adjacents et alignés.

4. Système interactif audiovisuel entre une scène locale et une scène distante, **caractérisé en ce qu'**il comprend :
un système de prise de vue suivant l'une quelconque des revendications précédentes, et
un système de restitution de l'image de la scène distante comportant au moins un dispositif (2) de restitution comprenant lui-même un écran (E) sur lequel est formée l'image de la scène distante.

5. Système interactif audiovisuel selon la revendication 4, **caractérisé en ce que** le dispositif (2) de restitution comprend en outre une lame semi-réfléchissante (21) située entre la scène locale et l'écran (E) apte à renvoyer le faisceau (F) issu de la scène locale vers le dispositif (1) de prise de vue.

6. Système interactif audiovisuel selon l'une quelconque des revendications 4 et 5, comprenant plusieurs dispositifs (2) de restitution, **caractérisé en ce que** les écrans (E) desdits dispositifs (2) de restitution sont adjacents et alignés.

## Claims

1. Picture shooting system comprising several shooting devices (1) each having a field angle (α) defining a beam (F) of light rays that are able to be captured by the said shooting device (1), **characterized in that** it comprises means (13) for arranging the said shooting devices so that the field angle of each shooting device is contiguous to the afield angle of the adj acent shooting device, and means (14) for simultaneous control of the shots, **in that** each of the said shouting devices is associated with a conclave mirror (10) capable of folding the beam (F) towards the said shooting device (1) with which it is associated and having a focus, and **in that** the said shooting device (1) is situated in the vicinity of the focus of the said associated mirror.

2. Picture shooting system according to Claim 1, **characterized in that** each mirror (10) is a mirror that is cylindrical of toric or of resolution.

3. Picture shooting system according to either one of Claims 1 and 2, **characterized in that** the respective mirrors (10) of the shooting devices are adjacent and in line.

4. Interactive audiovisual system between a local scene and a remote scene, **characterized in that** it comprises:
a picture shooting system according to any one of the preceding claims, and
a system for restarting the image of the remote scene comprising at least one restoring device (2) itself comprising a screen (E) on which the image of the remote scene is formed.

5. Interactive audiovisual system according to Claim 4, **characterized in that** the restoring device (2) al so comprises a thin semi-reflective sheet (21) situated between the local scene and the screen (E) capable of sending back the beam (F) originating from the local scene to the shooting device (1).

6. Interactive audiovisual system according to either one of Claims 4 and 5, comprising several restoring devises (2), **characterized in that** the screens (E) of the said restoring devices (2) are adjacent and aligned.

## Patentansprüche

1. Aufnahmesystem, umfassend mehrere Aufnahmevorrichtungen (1), die jede über einen Aufnahmewinkel (α) verfügen, der ein Lichtstrahlbündel (F) definiert, das von dieser Aufnahmevorrichtung (1) erfasst werden kann, **dadurch gekennzeichnet, dass** es Mittel (13) aufweist, um diese Aufnahmevorrichtungen derart anzuordnen, dass der Aufnahmewinkel jeder Aufnahmevorrichtung an den Aufnahmewinkel der benachbarten Aufnahmevorrichtung angrenzt, und Mittel (14) zur gleichzeitige Steuerung der Aufnahmen, und dadurch, dass jeder dieser Aufnahmevorrichtungen ein Konkavspiegel (10) zugeordnet ist, der geeignet ist, das Bündel (F) zur zugehörigen Aufnahmevorrichtung (1) zurückzuwerfen, und der einen Brennpunkt aufweist, und dadurch, dass die Aufnahmevorrichtung (1) in der Nachbarschaft des Brennpunkts des zugehörigen Spielgels angeordnet ist.

2. Aufnahmesystem nach Anspruch 1, **dadurch gekennzeichnet, dass** jeder Spiegel (10) ein zylindrischer oder torischer Spiegel oder ein Drehspiegel ist.

3. Aufnahmesystem nach einem der Anspräche 1 und 2, **dadurch gekennzeichnet, dass** die jeweiligen Spiegel (10) dieser Aufnahmevorrichtungen angrenzend und bündig sind.

4. Interaktiven audiovisuelles System zwischen einer lokalen Bühne und einer Fernbühne, dadurch gekenntzeichnet, dass es umfasst:
ein Aufnahmesystem nach einem der vorherigen Ansprüche, und
ein Wiedergabesystem für das Bild der Fernbühne, umfassend mindestens eine Wiedergabevorrichtung (2), die ihrerseits einen Bildschirm (E) aufweist, auf dem das Bild der Fernbühne geformt wird.

5. Interaktives audiovisuelles System nach Anspruch 4, **dadurch gekennzeichnet, dass** die Wiedergabevorrichtung (2) außerdem eine zwischen der lokalen Bühne und dem Bildschirm (E) angeordnete halbdurchlässige Platte (21) umfasst, die geeignet ist, das Bündel (F) von der lokalen Bühne zur Aufnahmevorrichtung (1) zurückzuwerfen.

6. Interaktives audiovisuelles System nach einem der Ansprüche 4 und 5, umfassend mehrere Wiedergabevorrichtungen in, **dadurch gekennzeichnet, dass** die Bildschirme (E) dieser Wiedergabevorrichtungen (2) angrenzend und bündig sind.
